# FASCICULE DE BREVET EUROPEEN

(11) **EP 1 520 378 B1**
(45) Date de publication et mention de la délivrance du brevet: **25.05.2011**
(21) Numéro de dépôt: 03748168.6
(22) Date de dépôt: 13.06.2003
(51) Int. Cl.: H04L 12/56

(54) **SYSTEME ET PROCEDE DE GESTION SUR UN TERMINAL DE L ARCHITECT URE DEDIEE A UN RESEAU DE COMMUNICATION**
SYSTEM UND VERFAHREN ZUM VERWALTEN VON KOMMUNIKATIONSNETZ-SPEZIFISCHER ARCHITEKTUR IN EINEM ENDGERÄT
SYSTEM AND METHOD OF MANAGING COMMUNICATION NETWORK-DEDICATED ARCHITECTURE ON A TERMINAL

(30) Priorité: 17.06.2002 FR 0207457
(43) Date de publication de la demande: 06.04.2005
(73) Titulaire: Orange France, 94745 Arcueil Cedex (FR)
(72) Inventeur: ANNIC, Etienne, F-78120 Rambouillet (FR)
(74) Mandataire: de la Fouchardière, Marie-Noëlle
(86) Numéro de dépôt international: PCT/FR2003/001807
(87) Numéro de publication internationale: WO 2003/107601

(56) Documents cités:
- WO-A-00/67435
- WO-A-01/28160
- WO-A-02/05538
- WO-A-02/09451

## Description

La présente invention concerne un système et un procédé de gestion sur un terminal d'une architecture dédiée à un réseau de communication.

L'invention s'applique plus particulièrement à la gestion simultanée d'accès à plusieurs réseaux de communication offrant un ensemble de services, à partir d'un terminal relié à un réseau mobile public auquel l'utilisateur est abonné.

Actuellement, ces services sont accessibles à partir d'un terminal raccordé aux réseaux de télécommunications mobiles, tel que le système GPRS (General Packet Radio Service, soit service général de radiocommunication en mode paquet) ou le système UMTS (Universal Mobile Telecommunications System, soit système universel de télécommunications avec les mobiles).

Dans ces dits réseaux mobiles, pour sélectionner un réseau de communication offrant des services, il faut sélectionner un nom identifiant ledit réseau de communication. Pour établir une connexion entre un terminal et un réseau de communication déterminé, ledit nom identifiant est transmis à travers un équipement de support de service du réseau mobile vers un équipement de gestion d'accès aux dits réseaux de communication. Ledit nom identifiant, en provenance du terminal, permet audit équipement de support de service du réseau mobile de déterminer l'équipement de gestion d'accès offrant l'accès au réseau de communication et associé audit nom identifiant.

Dans les réseaux actuels de type GPRS ainsi que UMTS, le nom identifiant un réseau de communication est appelé un APN (Access Point Name, soit nom de point d'accès). Dans ces mêmes systèmes, l'équipement de support de service est appelé un SGSN (Serving GPRS Support Node, soit noeud de support de service GPRS) et l'équipement de gestion d'accès aux différents réseaux de communication est appelé GGSN (Gateway GPRS Service Node, soit noeud de service GPRS de transit).

Un nom identifiant APN comprend principalement un identifiant correspondant au réseau de communication sélectionné, un identifiant de l'opérateur qui gère ledit réseau de communication et un identifiant de la technologie du réseau mobile, par exemple GPRS. Le format, ainsi que l'usage, d'un nom identifiant APN sont normalisés par l'ETSI (European Telecommunications Standards Institute, soit Institut européen de normalisation des télécommunications).

Entre autre fonction, un équipement de support de service SGSN reçoit d'un terminal un nom identifiant APN et le transmet pour reconnaissance au serveur de nom identifiant APN auquel il est raccordé. Ledit serveur de nom identifiant APN répond à l'équipement de support de service SGSN en transmettant la liste des équipements de gestion d'accès GGSN associés au nom identifiant APN. Entre autre fonction, ledit équipement de support de service SGSN établit une connexion vers un équipement de gestion d'accès GGSN appartenant à ladite liste. Ledit équipement de gestion d'accès GGSN établit la connexion vers un réseau de communication correspondant au nom identifiant APN. Ces équipements SGSN et GGSN sont également normalisés par l'ETSI.

Pour accéder à un réseau de communication offrant un ensemble de services, l'utilisateur sélectionne un nom identifiant APN sur le terminal, de manière à établir la connexion avec le réseau de communication correspondant.

Une fois un nom identifiant APN sélectionné sur le terminal, un protocole d'accès démarre. En GPRS ou en UMTS, ce protocole est appelé "PDP" (Packet Data Protocol, soit protocole de données en mode paquet). Une procédure d'établissement de la connexion du terminal vers l'équipement de gestion d'accès dit GGSN est mise en oeuvre. Pour permettre l'établissement de la connexion, un lien est créé à travers le réseau mobile vers le réseau de communication sélectionné. En GPRS ou en UMTS, ce lien est appelé "PDP Context". Ce lien permet l'accès du terminal à l'ensemble des services dudit réseau de communication.

A la fin de ladite procédure, le terminal reçoit une adresse en provenance du réseau de communication, avec lequel la connexion est établie. Cette adresse identifie ledit terminal au sein dudit réseau de communication. Elle est associée audit lien appelé "PDP Context", existant entre le terminal et ledit réseau de communication.

Actuellement, un terminal ne gère simultanément qu'une connexion vers un réseau de communication. II ne reçoit simultanément qu'une seule adresse, associée à un lien appelé "PDP Context", en provenance d'un seul réseau de communication.

Dans cette configuration, toute l'architecture existante sur le terminal est dédiée au fonctionnement dudit terminal connecté audit réseau de communication.

D'autre part, chaque réseau de communication est indépendant des autres réseaux de communication et possède son propre adressage. De ce fait, un réseau A de communication ne connaît pas ce qui est réalisé par un réseau B de communication. En particulier, le réseau A de communication ne sait pas avec quel terminal le réseau B de communication est connecté. De la même façon, ledit réseau A de communication ne sait pas quelle adresse est transmise par le réseau B de communication pour identifier ledit terminal connecté.

Par ailleurs, dans le document WO 02/09451 est présenté une méthode de connexion d'une pluralité de dispositifs (TE) par l'intermédiaire d'un terminal mobile (MT) vers un unique réseau de données paquets (PDN). Comme le terminal mobile (MT) ne reçoit les adresses IP, affectées à chaque dispositif (TE), que d'un seul réseau de données (PDN), lesdites adresses sont toujours différentes les unes des autres. Par construction, un même réseau attribue une adresse unique pour identifier un terminal auquel il est raccordé. Lesdites différentes adresses, en provenance d'un même réseau de données, sont alors allouées à une pluralité de dispositifs (TE).

Ce document ne décrit d'aucune façon la gestion simultanée de plusieurs réseaux de communication connectés à un même terminal.

La norme de l'ETSI prévoit que plusieurs connexions peuvent être établies simultanément vers différents réseaux de communication à partir d'un même terminal.

Dans ce cas, ledit terminal doit créer simultanément plusieurs liens appelés "PDP Context" pour établir une connexion vers plusieurs réseaux de communication.

A chacun de ces liens, appelés "PDP Context", est associée une adresse en provenance de chacun desdits réseaux de communication pour identifier ledit terminal.

Lors de l'accès du terminal à deux réseaux de communication A et B, deux liens, appelés "PDP Context", sont alors gérés par ledit terminal, ainsi que les deux adresses reçues.

Par conséquent, les deux liens, permettant l'accès vers les deux réseaux de communication, sont en liaison par intermédiaire dudit terminal. Dans cette configuration, les deux réseaux de communication ne sont plus indépendants, puisqu'une liaison physique est établie entre eux par ledit terminal.

Dès lors, des problèmes d'adressage, dans le cas d'adresses allouées identiques pour des réseaux différents, des problèmes de confidentialité, de sécurité et de piratage sont rencontrés concernant les informations transmises par les services des différents réseaux de communication. Ces problèmes sont particulièrement sensibles, par exemple lors de l'utilisation d'un service bancaire ou bien lors de l'accès par un réseau de communication à l'intranet interne d'une entreprise privée.

Aussi, le problème technique à résoudre par l'objet de la présente invention est de proposer un système et un procédé de gestion sur un terminal d'un ensemble d'architectures dédiées à une pluralité de réseaux de communication, qui permettrait de remédier aux inconvénients des systèmes existants en réorganisant la structure d'un terminal de manière à éviter toute liaison entre les connexions vers plusieurs réseaux de communication.

La solution au problème technique posé consiste, selon la présente invention, en ce que, la connexion auxdits réseaux de communication étant établie via un réseau mobile, ledit système comprend au moins un gestionnaire d'architectures dédiées, intégré audit terminal incluant au moins une interface utilisateur, apte à gérer indépendamment l'ensemble desdites architectures dédiées auxdits réseaux de communication, apte à traiter simultanément le fonctionnement dudit terminal connecté avec plusieurs desdits réseaux de communication, apte à gérer séparément une connexion simultanée avec plusieurs desdits réseaux de communication et apte à gérer indépendamment plusieurs desdits réseaux de communication après avoir reçu, en provenance de chacun desdits réseaux connectés au terminal, une adresse non unique.

A l'établissement de la connexion vers un réseau de communication, le gestionnaire d'architectures dédiées dialogue avec ledit réseau de communication. Ledit gestionnaire d'architectures dédiées désigne une architecture dédiée qui est consacré à la connexion audit réseau de communication.

A l'établissement de chaque nouvelle connexion vers un nouveau réseau de communication, le gestionnaire d'architectures dédiées désigne une architecture différente, dédiée à la connexion audit nouveau réseau de communication.

Dans un même terminal, les différentes architectures dédiées fonctionnent simultanément, chacune desdites architectures dédiées donnant accès à un réseau de communication différent.

Selon l'invention, chacune desdites architectures dédiées à un réseau de communication comprend au moins une interface réseau, paramétrée par une adresse transmise par ledit gestionnaire d'architectures dédiées et en provenance dudit réseau de communication pour identifier ledit terminal dans ledit réseau de communication.

Chaque interface réseau est comprise dans une architecture dédiée différente. De ce fait, il n'existe plus de relation entre chacun des liens établis vers les différents réseaux de communication.

Chaque réseau de communication communique avec une architecture dédiée dudit terminal par l'intermédiaire d'une interface réseau séparée. L'adresse transmise par chacun des réseaux de communication est reçue par ledit gestionnaire d'architectures dédiées et paramétrée sur une interface réseau. Une interface réseau d'une architecture dédiée est sans rapport avec une autre interface réseau d'une autre architecture dédiée.

Conformément à l'invention, chacune desdites architectures dédiées à un réseau de communication est indépendante des autres architectures dédiées dudit terminal.

Malgré le fonctionnement simultané de plusieurs architectures dédiées sur un même terminal, aucune liaison n'est réalisée entre les différents réseaux de communication. La structure du terminal est prévue de manière à ce que lesdites architectures dédiées n'aient aucune relation entre elles. Leur fonctionnement est distinct et autonome.

De ce fait, le fonctionnement dudit terminal peut être différent selon le réseau de communication avec lequel il est connecté, grâce aux différentes architectures dédiées. Par exemple, des fonctionnalités peuvent être prises en compte avec l'un des réseaux de communication et ne pas exister avec un autre réseau de communication.

De plus, du fait de l'augmentation du nombre de services accessibles par des réseaux de communication, l'autonomie de chaque architecture dédiée permet notamment d'affecter des ressources spécifiques, par exemple des applications spécifiques ou bien un espace mémoire différent, ou bien des qualités de service différentes d'un réseau de communication à l'autre.

Conformément à l'invention, ladite interface utilisateur du terminal donne accès à au moins une architecture dédiée à un réseau de communication.

L'interface utilisateur dudit terminal, par exemple un moyen d'affichage ou un moyen d'écoute sonore ou un moyen de transmission d'un signal vocal ou bien un moyen de lecture en braille, permet l'accès aux services correspondant à un réseau de communication. Compte tenu des différentes architectures dédiées à différents réseaux de communication, plusieurs services peuvent être utilisés simultanément sur ledit terminal.

L'invention a également pour objet un procédé de gestion sur un terminal d'un ensemble d'architectures dédiées à une pluralité de réseaux de communication, ledit terminal incluant au moins une interface utilisateur, et la connexion auxdits réseaux de communication. étant établie via un réseau mobile, remarquable en ce que ledit procédé comporte les étapes consistant à: - établir une connexion dans au moins un gestionnaire d'architectures dédiées entre ledit terminal et plusieurs desdits réseaux de communication par l'intermédiaire dudit réseau mobile; - recevoir dans ledit gestionnaire d'architectures dédiées dudit terminal au moins une adresse en provenance desdits réseaux de communication connectés audit terminal; - sélectionner dans ledit terminal une architecture dédiée pour chacun desdits réseaux de communication par ledit gestionnaire d'architectures dédiées; - transmettre ladite adresse vers ladite architecture dédiée sélectionnée par ledit gestionnaire d'architectures dédiées; - paramétrer ladite adresse sur une interface réseau comprise dans lesdites architectures dédiées auxdits réseaux de communication; - accéder à au moins une architecture dédiée par l'intermédiaire de ladite interface utilisateur dudit terminal; - établir et gérer séparément par ledit gestionnaire d'architectures dédiées au moins une connexion simultanée vers plusieurs réseaux de communication; - traiter la gestion simultanée de plusieurs réseaux de communication connectés audit terminal; - gérer indépendamment plusieurs réseaux de communication après avoir reçu, en provenance de chacun desdits réseaux connectés au-terminal, une adresse non unique.

Les différentes étapes du procédé conforme à l'invention se reproduisent à chaque connexion dudit terminal avec un nouveau réseau de communication.

Ledit gestionnaire d'architectures dédiées gère chaque connexion vers un réseau de communication.

Il attribue une architecture dédiée à chacun desdits réseaux de communication, ce qui offre la possibilité de réaliser des gestions différentes et indépendantes, dans le même temps.

La description qui va suivre en regard du dessin annexé, donné à titre d'exemple non limitatif, fera bien comprendre en quoi consiste l'invention et comment elle peut être réalisée.

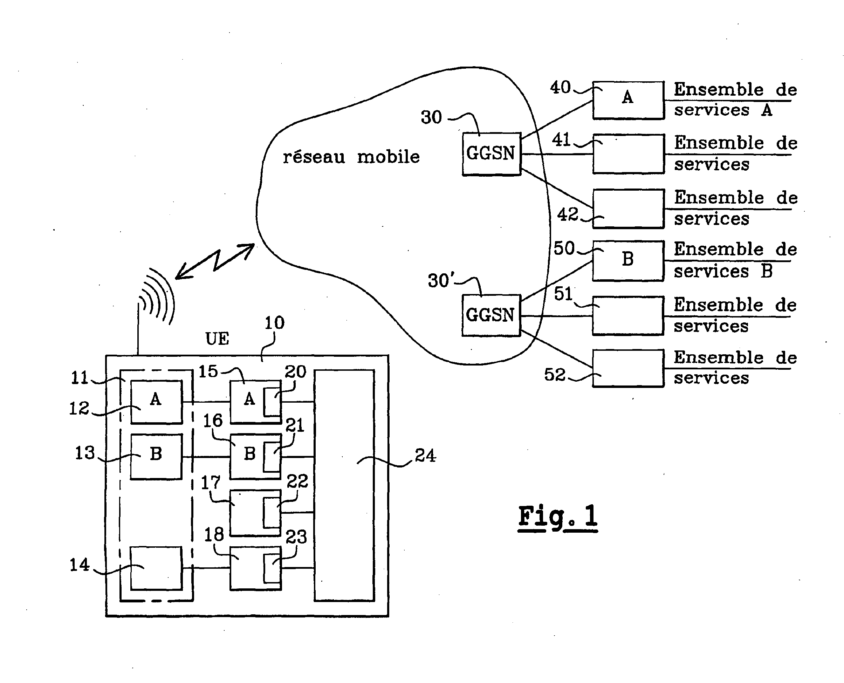

La figure 1 est un schéma de l'architecture générale du système de gestion sur un terminal d'une architecture dédiée à un réseau de communication, conforme à l'invention.

Pour faciliter la compréhension, l'invention est décrite avec les appellations utilisées dans la terminologie des systèmes UMTS. Toutefois, l'invention s'applique à tous les systèmes de communication utilisant des techniques identiques d'identification d'un réseau de communication.

De même, pour simplifier la description, l'abonné au réseau de télécommunications mobiles est indiqué comme un terminal 10, mais il peut être de différentes natures, par exemple un serveur ou bien un terminal de communication mobile, un ordinateur personnel de type PC ou bien un poste de télévision, et par un équipement d'abonné 10 appelé UE (User Equipment) sur la figure 1.

Quel que soit le terminal 10 utilisé, celui-ci est relié à un réseau mobile public auquel l'utilisateur est abonné.

Lorsque le terminal 10 souhaite accéder à un premier réseau 40, 41, 42 de communication, il transmet, par l'intermédiaire d'une borne radio du réseau mobile, un nom APN identifiant ledit réseau 40, 41, 42 de communication, offrant un ensemble de services auxquels ledit terminal 10 souhaite accéder.

Dans ledit réseau mobile, un équipement de gestion d'accès radio appelé "SGSN" reçoit ledit nom APN en provenance dudit terminal 10. Ledit équipement appelé "SGSN" recherche quel équipement de gestion d'accès, appelé "GGSN", gère ledit nom identifiant APN.

L'équipement appelé "SGSN" transmet le nom identifiant APN à un serveur de nom APN auquel il est raccordé, qui possède une table de correspondance entre les noms APN et les équipements de gestion d'accès appelés "GGSN". Ledit équipement appelé "SGSN" sélectionne un équipement 30 de gestion d'accès appelé "GGSN", qui gère ledit nom APN.

Ledit équipement 30 appelé "GGSN" établit la connexion vers ledit premier réseau 40, 41, 42 de communication. Un premier lien appelé "PDP Context" est établi à travers le réseau mobile vers ledit premier réseau 40, 41, 42 de communication. Ce premier lien "PDP Context" permet l'accès du terminal 10 audit premier réseau 40, 41, 42 de communication.

En fonction du réseau mobile, pour des technologies de type GPRS ou bien de type UMTS, si un utilisateur accède à plusieurs services dans un même réseau de communication, plusieurs communications simultanées sont établies appelées "PDP Context secondaires" vers ledit réseau de communication.

Dans ce cas, les différentes communications appelées "PDP Context secondaires" sont rattachées à un même lien dit "PDP Context primaire", ledit "PDP Context primaire" ayant un fonctionnement identique à celui décrit précédemment pour un "PDP Context", appellation utilisée dans la description ci-dessous.

Ledit premier réseau 40, 41, 42 de communication transmet ensuite une adresse, dite "A1", vers le terminal 10, adresse qui identifie ledit terminal 10 pour ledit premier réseau de communication connecté.

Dans ledit terminal 10, le gestionnaire d'architectures dédiées 24 reçoit ladite adresse A1. Ledit gestionnaire d'architectures dédiées 24 affecte une première architecture dédiée 15 audit premier réseau 40, 41, 42 de communication connecté et transmet l'adresse A1 à une première interface réseau 20 incluse dans ladite première architecture dédiée 15 audit premier réseau 40, 41, 42 de communication connecté.

Ladite première architecture dédiée 15 est associée audit premier lien appelé "PDP Context", qui permet l'accès dudit terminal 10 audit premier réseau 40, 41, 42 de communication.

Quand ledit terminal 10 souhaite accéder à un deuxième réseau de communication 50, 51, 52, il transmet un deuxième nom APN et le même processus de connexion est répété à travers les équipements mentionnés ci-dessus, appelés SGSN et GGSN soit 30'.

Une nouvelle connexion est établie entre ledit terminal 10 et un deuxième réseau 50, 51, 52 de communication. Par conséquent, un deuxième lien appelé "PDP Context" est établi à travers ledit réseau mobile vers ledit deuxième réseau 50, 51, 52 de communication.

Une nouvelle adresse, dite "A2", est transmise vers le terminal 10, qui identifie ledit terminal 10 pour ledit deuxième réseau 50, 51, 52 de communication.

Dans ledit terminal 10, ledit gestionnaire d'architectures dédiées 24 reçoit la nouvelle adresse A2. II affecte une deuxième architecture dédiée 16 audit deuxième réseau 50, 51, 52 de communication connecté et transmet l'adresse A2 à une deuxième interface réseau 21 incluse dans ladite deuxième architecture dédiée 16 audit deuxième réseau de communication connecté.

Dès lors, ladite deuxième architecture dédiée 16 est associée audit deuxième lien appelé "PDP Context", qui permet l'accès dudit terminal 10 audit deuxième réseau 50, 51, 52 de communication.

De cette façon, dans ledit terminal 10, une architecture indépendante 15, 16, 17, 18 est dédiée à chaque réseau de communication 40, 41, 42, 50, 51, 52 auquel ledit terminal 10 est connecté. Chaque adresse reçue d'un réseau de communication différent est donc paramétrée sur une interface réseau différente 20, 21, 22, 23 dans une architecture dédiée 15, 16, 17, 18 à un réseau de communication 40, 41, 42, 50, 51, 52.

De la même manière, chaque interface réseau 20, 21, 22, 23 est identifiée par une et une seule adresse pour garantir le bon destinataire lors de la transmission des données entre un réseau de communication 40, 41, 42, 50, 51, 52 et ledit terminal 10.

Selon les technologies des réseaux de communication et en conformité avec la norme, l'adresse transmise peut être de différents formats, par exemple une adresse IP (Intemet Protocol, soit protocole intemet) en version 4 ou bien en version 6. Ces formats et différentes versions sont standardisés par l'organisation de normalisation appelée IETF (Internet Engineering Task Force, soit groupe d'étude sur l'ingénierie internet).

Quelque soit le format, la version ou bien le type d'adressage, par exemple de type PPP (Point-to-Point Protocol, soit protocole point à point) ou tout autre type d'adressage à venir, la transmission de l'adresse entre un réseau de communication et ledit terminal 10 reste inchangée. Du fait de l'architecture dudit terminal 10, son adaptation aux différentes générations est facilitée.

Avec cette structure, pour un terminal 10, chaque architecture dédiée, avec son interface réseau, est indépendante de chacune des architectures dédiées 15, 16, 17, 18 dudit terminal 10.

Chaque architecture dédiée 15, 16, 17, 18 à un réseau de communication 40, 41, 42, 50, 51, 52 reçoit toutes les informations en provenance dudit réseau 40, 41, 42, 50, 51, 52 de communication associée à ladite architecture dédiée 15, 16, 17, 18, par l'intermédiaire du "PDP Context" correspondant audit réseau 40, 41, 42, 50, 51, 52 de communication.

Une fois la connexion établie, l'architecture dédiée accède à l'interface utilisateur 11 dudit terminal 10. De cette façon, l'abonné accède à au moins un contenu de service d'un premier réseau 40, 41, 42 de communication, par exemple une page d'accueil 12.

Lorsque l'abonné sélectionne sur ledit terminal 10 l'accès à un deuxième réseau 50, 51, 52 de communication, le contenu correspondant à un nouveau service 13 dudit deuxième réseau 50, 51, 52 de communication est accessible par l'intermédiaire de ladite interface utilisateur 11, par exemple une nouvelle page d'accueil 13.

Selon les possibilités du système d'exploitation en place dans ledit terminal 10, plusieurs fenêtres pouvant être affichées proposant différentes pages d'accueil 12, 13, 14 des différents réseaux de communication ou bien l'abonné peut basculer d'une page d'accueil à l'autre au moyen d'un dispositif de sélection, tel qu'un bouton ou une commande tactile sur ledit terminal 10.

Dans le cas où l'affichage du contenu sur ledit terminal 10 ne serait pas requis par le réseau de communication, la représentation du contenu dudit réseau de communication peut être réalisée par tout autre moyen de l'interface utilisateur 11 dudit terminal 10, tel qu'un message vocal transmis par un moyen d'écoute sonore.

Chaque architecture dédiée 15, 16, 17, 18 commande l'accès aux moyens existants sur ledit terminal 10 permettant l'usage des services d'un réseau de communication, par exemple un visionneur de film ou d'images, un navigateur pour lire des pages internet, etc...

Le système et le procédé, conformes à l'invention, permettent la gestion distincte et autonome de plusieurs connexions à un réseau de communication dans un même terminal 10, par l'intermédiaire dudit gestionnaire d'architectures dédiées 24.

Un lien dit "PDP Context" est associé à un réseau de communication et un seul. Ledit réseau de communication transmet une adresse, et une seule, vers une seule interface réseau pour identifier ledit terminal 10.

De cette manière, chaque interface réseau est associée à une, et une seule, adresse en provenance d'un réseau de communication. Et dans un réseau de communication, une adresse donnée est transmise vers une, et une seule, interface réseau.

Ce principe d'unicité de l'adressage entre un réseau et une interface réseau permet la transmission sans erreur des données vers le bon destinataire, dudit terminal 10 vers un réseau de communication 40, 41, 42, 50, 51, 52 et vice versa.

L'autonomie et le fonctionnement indépendant des différentes architectures dédiées 15, 16, 17, 18 dudit terminal 10 garantissent le respect de la gestion du principe d'unicité de l'adressage, lors de l'accès à plusieurs réseaux de communication 40, 41, 42, 50, 51, 52.

Rappelons que chaque réseau de communication est indépendant et possède son propre adressage. Par conséquent, deux réseaux de communication peuvent transmettre la même adresse audit terminal 10.

Aucune violation du principe d'unicité d'adressage ne se produit avec ledit terminal 10 dont l'architecture est conforme à l'invention. En effet, deux interfaces réseau indépendantes reçoivent ces deux adresses identiques et sont reliées à deux réseaux de communication différents, qui restent indépendants. Chaque architecture est autonome et dédiée à un réseau de communication différent.

Dans ce cas, le même adressage peut être utilisé par plusieurs réseaux de communication 40, 41, 42, 50, 51, 52. L'unicité d'adressage est préservée dans ledit terminal 10. C'est une façon de résoudre le problème du manque d'adresses disponibles, par exemple sur les réseaux IP (Intenet Protocol, soit protocole intemet).

Même lorsque l'adressage n'est pas identique pour deux réseaux de communication différents, la gestion indépendante des architectures dédiées 15, 16, 17, 18 assure la confidentialité et la sécurité entre lesdits réseaux de communication 40, 41, 42, 50, 51, 52. Ces besoins de confidentialité et de sécurité se font, par exemple, sentir lors d'une transaction bancaire ou bien lors du raccordement à un réseau privé d'entreprise.

Chacun des liens dit "PDP Context" est géré par une architecture dédiée différente, sans rapport avec les autres architectures dédiées 15, 16, 17, 18 à un réseau de communication 40, 41, 42, 50, 51, 52.

Du fait de la gestion séparée des réseaux de communication 40, 41, 42, 50, 51, 52 par les différentes architectures dédiées 15, 16, 17, 18, cette structure assure une étanchéité entre les différents services connectés audit terminal 10 et empêche le piratage des informations transmises par un service d'un premier réseau de communication à partir d'un deuxième réseau de communication, par exemple relié à Internet.

De plus, pour un même terminal, le traitement indépendant de chaque réseau de communication 40, 41, 42, 50, 51, 52 par une architecture dédiée différente 15, 16, 17, 18 permet une meilleure adaptation à chaque réseau de communication.

Différentes qualités de services pourront être gérées simultanément sur un même terminal 10. Par exemple, un premier réseau aura une bonne qualité de transmission, un deuxième réseau moins bonne. Un troisième réseau aura un taux d'erreurs important.

Sur un même terminal 10, toutes les fonctionnalités et évolutions des réseaux de communication pourront également être gérées indépendamment par chaque architecture dédiée 15, 16, 17, 18 à un réseau de communication 40, 41, 42, 50, 51, 52.

## Revendications

1. Système de gestion sur un terminal (10) d'un ensemble d'architectures dédiées (15, 16, 17, 18) à une pluralité de réseaux (40, 41, 42, 50, 51, 52) de communication, ledit terminal (10) incluant au moins une interface utilisateur (11), **caractérisé en ce que**, la connexion auxdits réseaux (40, 41, 42, 50, 51, 52) de communication étant établie via un réseau mobile, ledit système comprend au moins un gestionnaire d'architectures dédiées (24), intégré audit terminal (10), apte à gérer indépendamment l'ensemble desdites architectures dédiées (15, 16, 17, 18) auxdits réseaux (40, 41, 42, 50, 51, 52) de communication, apte à traiter simultanément le fonctionnement dudit terminal (10) connecté avec plusieurs desdits réseaux (40, 41, 42, 50, 51, 52) de communication, apte à gérer séparément une connexion simultanée avec plusieurs desdits réseaux (40, 41, 42, 50, 51, 52) de communication et apte à gérer indépendamment plusieurs desdits réseaux (40, 41, 42, 50, 51, 52) de communication après avoir reçu, en provenance de chacun desdits réseaux connectés au terminal (10), une adresse non unique.

2. Système de gestion sur un terminal (10) d'un ensemble d'architectures dédiées (15, 16, 17, 18) selon la revendication 1, **caractérisé en ce que** chacune desdites architectures dédiées (15, 16, 17, 18) à un réseau (40, 41, 42, 50, 51, 52) de communication comprend au moins une interface réseau (20, 21, 22, 23), paramétrée par une adresse transmise par ledit gestionnaire d'architectures dédiées et en provenance dudit réseau (40, 41, 42, 50, 51, 52) de communication pour identifier ledit terminal (10) dans ledit réseau de communication (40, 41, 42, 50, 51, 52).

3. Système de gestion sur un terminal (10) d'un ensemble d'architectures dédiées (15, 16, 17, 18) selon l'une des revendications 1 ou 2, **caractérisé en ce que** chacune desdites architectures dédiées (15, 16, 17, 18) à un réseau (40, 41, 42, 50, 51, 52) de communication est indépendante des autres architectures dédiées (15, 16, 17, 18) dudit terminal (10).

4. Système de gestion sur un terminal (10) d'un ensemble d'architectures dédiées (15, 16, 17, 18) selon l'une quelconque des revendications 1 à 3, **caractérisé en ce que** ladite interface utilisateur (11) du terminal (10) donne accès à au moins une architecture dédiée (15, 16, 17, 18) à un réseau de communication (40, 41, 42, 50, 51, 52).

5. Gestionnaire d'architectures dédiées (24) dans un terminal (10) associé à un système de gestion d'architectures dédiées, selon l'une quelconque des revendications 1 à 4, **caractérisé en ce qu'**il comprend au moins un moyen de réception et de transmission avec au moins un réseau de communication (40, 41, 42, 50, 51, 52), un moyen de traitement de la gestion d'accès simultanés à plusieurs réseaux de communication (40, 41, 42, 50, 51, 52) par ledit terminal (10), un moyen de sélection d'une architecture dédiée (15, 16, 17, 18) à un réseau de communication (40, 41, 42, 50, 51, 52) et un moyen de transmission avec au moins une architecture dédiée (15, 16, 17, 18) dudit terminal (10).

6. Terminal (10) associé à un système de gestion d'architectures dédiées, selon l'une quelconque des revendications 1 à 4, **caractérisé en ce qu'**il comprend au moins un gestionnaire d'architectures dédiées (24) conforme à la revendication 5.

7. Procédé de gestion sur un terminal (10) d'un ensemble d'architectures dédiées (15, 16, 17, 18) à une pluralité de réseaux (40, 41, 42, 50, 51, 52) de communication, ledit terminal (10) incluant au moins une interface utilisateur (11), **caractérisé en ce que**, la connexion auxdits réseaux (40, 41, 42, 50, 51, 52) de communication étant établie via un réseau mobile, ledit procédé comporte les étapes consistant à:
- établir une connexion dans au moins un gestionnaire d'architectures dédiées (24) entre ledit terminal (10) et plusieurs desdits réseaux (40, 41, 42, 50, 51, 52) de communication par l'intermédiaire dudit réseau mobile,
- recevoir dans ledit gestionnaire d'architectures dédiées (24) dudit terminal (10) au moins une adresse en provenance de chacun desdits réseaux (40, 41, 42, 50, 51, 52) de communication connectés audit terminal,
- sélectionner dans ledit terminal (10) une architecture dédiée (15, 16, 17, 18) pour chacun desdits réseaux (40, 41, 42, 50, 51, 52) de communication par ledit gestionnaire d'architectures dédiées (24),
- transmettre ladite adresse vers lesdites architectures dédiées (15, 16, 17, 18) sélectionnées par ledit gestionnaire d'architectures dédiées (24),
- paramétrer ladite adresse sur une interface réseau (20, 21, 22, 23) comprise dans lesdites architectures dédiées (15, 16, 17, 18) auxdits réseaux de communication (40, 41, 42, 50, 51, 52),
- accéder à au moins une architecture dédiée (15, 16, 17, 18) par l'intermédiaire de ladite interface utilisateur (11) dudit terminal (10),
- établir et gérer séparément par ledit gestionnaire d'architectures dédiées (24) une connexion simultanée vers plusieurs réseaux (40, 41, 42, 50, 51, 52) de communication,
- traiter la gestion indépendante de l'ensemble desdites architectures dédiées (15, 16, 17, 18) auxdits réseaux (40, 41, 42, 50, 51, 52) de communication,
- traiter la gestion simultanée de plusieurs réseaux de communication (40, 41, 42, 50, 51, 52) connectés audit terminal (10)
- gérer indépendamment plusieurs desdits réseaux (40, 41, 42, 50, 51, 52) de communication après avoir reçu, en provenance de chacun desdits réseaux connectés au terminal (10), une adresse non unique.

## Claims

1. Management system on a terminal (10) for a set of architectures (15, 16, 17, 18) dedicated to a plurality of communication networks (40, 41, 42, 50, 51, 52), said terminal (10) including at least one user interface (11), **characterized in that**, the connection to said communication networks (40, 41, 42, 50, 51, 52) being set up via a mobile network, said system comprises at least one dedicated architecture manager (24), integrated into said terminal (10), able to manage independently all of said architectures (15, 16, 17, 18) dedicated to said communication networks (40, 41, 42, 50, 51, 52), able to process simultaneously the operation of said terminal (10) connected with a number of said communication networks (40, 41, 42, 50, 51, 52), able to manage separately a simultaneous connection with a number of said communication networks (40, 41, 42, 50, 51, 52) and able to manage independently a number of said communication networks (40, 41, 42, 50, 51, 52) after having received, from each of said networks connected to the terminal (10), a non-unique address.

2. Management system on a terminal (10) for a set of dedicated architectures (15, 16, 17, 18) according to Claim 1, **characterized in that** each of said architectures (15, 16, 17, 18) dedicated to a communication network (40, 41, 42, 50, 51, 52) comprises at least one network interface (20, 21, 22, 23), configured by an address transmitted by said dedicated architecture manager and originating from said communication network (40, 41, 42, 50, 51, 52) to identify said terminal (10) in said communication network (40, 41, 42, 50, 51, 52).

3. Management system on a terminal (10) for a set of dedicated architectures (15, 16, 17, 18) according to one of Claims 1 or 2, **characterized in that** each of said architectures (15, 16, 17, 18) dedicated to a communication network (40, 41, 42, 50, 51, 52) is independent of the other dedicated architectures (15, 16, 17, 18) of said terminal (10).

4. Management system on a terminal (10) for a set of dedicated architectures (15, 16, 17, 18) according to any one of Claims 1 to 3, **characterized in that** said user interface (11) of the terminal (10) provides access to at least one architecture (15, 16, 17, 18) dedicated to a communication network (40, 41, 42, 50, 51, 52).

5. Dedicated architecture manager (24) in a terminal (10) associated with a dedicated architecture management system, according to any one of Claims 1 to 4, **characterized in that** it comprises at least one means of receiving and transmitting with at least one communication network (40, 41, 42, 50, 51, 52), a means of processing the management of simultaneous access to a number of communication networks (40, 41, 42, 50, 51, 52) by said terminal (10), a means of selecting an architecture (15, 16, 17, 18) dedicated to a communication network (40, 41, 42, 50, 51, 52) and a means of transmission with at least one dedicated architecture (15, 16, 17, 18) of said terminal (10).

6. Terminal (10) associated with a dedicated architecture management system, according to any one of Claims 1 to 4, **characterized in that** it comprises at least one dedicated architecture manager (24) according to Claim 5.

7. Management method on a terminal (10) for a set of architectures (15, 16, 17, 18) dedicated to a plurality of communication networks (40, 41, 42, 50, 51, 52), said terminal (10) including at least one user interface (11), **characterized in that**, the connection to said communication networks (40, 41, 42, 50, 51, 52) being set up via a mobile network, said method comprises steps consisting in:
- setting up a connection in at least one dedicated architecture manager (24) between said terminal (10) and a number of said communication networks (40, 41, 42, 50, 51, 52) via said mobile network,
- receiving in said dedicated architecture manager (24) of said terminal (10) at least one address from each of said communication networks (40, 41, 42, 50, 51, 52) connected to said terminal,
- selecting in said terminal (10) a dedicated architecture (15, 16, 17, 18) for each of said communication networks (40, 41, 42, 50, 51, 52) by said dedicated architecture manager (24),
- transmitting said address to said dedicated architecture (15, 16, 17, 18) selected by said dedicated architecture manager (24),
- setting parameters of said address on a network interface (20, 21, 22, 23) contained in said architectures (15, 16, 17, 18) dedicated to said communication networks (40, 41, 42, 50, 51, 52),
- accessing at least one dedicated architecture (15, 16, 17, 18) via said user interface (11) of said terminal (10),
- setting up and managing separately by said dedicated architecture manager (24) at least one simultaneous connection to a number of communication networks (40, 41, 42, 50, 51, 52),
- processing the independent management of all of said architectures (15, 16, 17, 18) dedicated to said communication networks (40, 41, 42, 50, 51, 52),
- processing the simultaneous management of a number of communication networks (40, 41, 42, 50, 51, 52) connected to said terminal (10),
- independently managing a number of said communication networks (40, 41, 42, 50, 51, 52) after having received, from each of said networks connected to the terminal (10), a non-unique address.

## Patentansprüche

1. System zur Verwaltung einer Gruppe von mehreren Kommunikationsnetzen (40, 41, 42, 50, 51, 52) dedizierten Architekturen (15, 16, 17, 18) in einem Endgerät (10), wobei das Endgerät (10) mindestens eine Benutzerschnittstelle (11) enthält, **dadurch gekennzeichnet, dass**, wenn die Verbindung mit den Kommunikationsnetzen (40, 41, 42, 50, 51, 52) über ein Mobilfunknetz aufgebaut wird, das System mindestens einen in das Endgerät (10) integrierten Manager dedizierter Architekturen (24) aufweist, der in der Lage ist, unabhängig die Gruppe von den Kommunikationsnetzen (40, 41, 42, 50, 51, 52) dedizierten Architekturen (15, 16, 17, 18) zu verwalten, in der Lage ist, gleichzeitig den Betrieb des Endgeräts (10) zu verarbeiten, das mit mehreren der Kommunikationsnetze (40, 41, 42, 50, 51, 52) verbunden ist, in der Lage ist, getrennt eine gleichzeitige Verbindung mit mehreren der Kommunikationsnetze (40, 41, 42, 50, 51, 52) zu verwalten, und in der Lage ist, unabhängig mehrere der Kommunikationsnetze (40, 41, 42, 50, 51, 52) zu verwalten, nachdem er von jedem der mit dem Endgerät (10) verbundenen Netz eine nicht-einmalige Adresse erhalten hat.

2. System zur Verwaltung einer Gruppe von dedizierten Architekturen (15, 16, 17, 18) in einem Endgerät (10), nach Anspruch 1, **dadurch gekennzeichnet, dass** jede der einem Kommunikationsnetz (40, 41, 42, 50, 51, 52) dedizierten Architekturen (15, 16, 17, 18) mindestens eine Netzschnittstelle (20, 21, 22, 23) aufweist, parametriert durch eine Adresse, die vom Manager dedizierter Architekturen übertragen wird und vom Kommunikationsnetz (40, 41, 42, 50, 51, 52) kommt, um das Endgerät (10) in dem Kommunikationsnetz (40, 41, 42, 50, 51, 52) zu identifizieren.

3. System zur Verwaltung einer Gruppe von dedizierten Architekturen (15, 16, 17, 18) in einem Endgerät (10), nach einem der Ansprüche 1 oder 2, **dadurch gekennzeichnet, dass** jede der einem Kommunikationsnetz (40, 41, 42, 50, 51, 52) dedizierten Architekturen (15, 16, 17, 18) unabhängig von den anderen dedizierten Architekturen (15, 16, 17, 18) des Endgeräts (10) ist.

4. System zur Verwaltung einer Gruppe von dedizierten Architekturen (15, 16, 17, 18) in einem Endgerät (10), nach einem der Ansprüche 1 bis 3, **dadurch gekennzeichnet, dass** die Benutzerschnittstelle (11) des Endgeräts (10) Zugang zu mindestens einer einem Kommunikationsnetz (40, 41, 42, 50, 51, 52) dedizierten Architektur (15, 16, 17, 18) verleiht.

5. Manager dedizierter Architekturen (24) in einem Endgerät (10), das einem Managementsystem von dedizierten Architekturen zugeordnet ist, nach einem der Ansprüche 1 bis 4, **dadurch gekennzeichnet, dass** er mindestens eine Einrichtung für den Empfang und die Übertragung mit mindestens einem Kommunikationsnetz (40, 41, 42, 50, 51, 52), eine Einrichtung zur Verarbeitung des Managements von gleichzeitigen Zugängen zu mehreren Kommunikationsnetzen (40, 41, 42, 50, 51, 52) durch das Endgerät (10), eine Einrichtung zur Auswahl einer einem Kommunikationsnetz (40, 41, 42, 50, 51, 52) dedizierten Architektur (15, 16, 17, 18), und eine Übertragungseinrichtung mit mindestens einer dedizierten Architektur (15, 16, 17, 18) des Endgeräts (10) aufweist.

6. Endgerät (10), das einem Managementsystem von dedizierten Architekturen zugeordnet ist, nach einem der Ansprüche 1 bis 4, **dadurch gekennzeichnet, dass** das Endgerät mindestens einen Manager dedizierter Architekturen (24) aufweist, nach Anspruch 5.

7. Verfahren zur Verwaltung einer Gruppe von mehreren Kommunikationsnetzen (40, 41, 42, 50, 51, 52) dedizierten Architekturen (15, 16, 17, 18) in einem Endgerät (10), wobei das Endgerät (10) mindestens eine Benutzerschnittstelle (11) enthält, **dadurch gekennzeichnet, dass**, wenn die Verbindung mit den Kommunikationsnetzen (40, 41, 42, 50, 51, 52) über ein Mobilfunknetz erfolgt, das Verfahren die Schritte aufweist, die darin bestehen:
- eine Verbindung in mindestens einem Manager von dedizierten Architekturen (24) zwischen dem Endgerät (10) und mehreren Kommunikationsnetzen (40, 41, 42, 50, 51, 52) über das Mobilfunknetz aufzubauen,
- im Manager von dedizierten Architekturen (24) des Endgeräts (10) mindestens eine Adresse zu empfangen, die von jedem der Kommunikationsnetze (40, 41, 42, 50, 51, 52) stammt, die mit dem Endgerät verbunden sind,
- im Endgerät (10) eine dedizierte Architektur (15, 16, 17, 18) für jedes der Kommunikationsnetze (40, 41, 42, 50, 51, 52) durch den Manager dedizierter Architekturen (24) auszuwählen,
- die Adresse an die dedizierte Architektur (15, 16, 17, 18) zu übertragen, die vom Manager dedizierter Architekturen (24) ausgewählt wurde,
- die Adresse auf einer Netzschnittstelle (20, 21, 22, 23) zu parametrieren, die in den den Kommunikationsnetzen (40, 41, 42, 50, 51, 52) dedizierten Architekturen (15, 16, 17, 18) enthalten ist,
- auf mindestens eine dedizierte Architektur (15, 16, 17, 18) mittels der Benutzerschnittstelle (11) des Endgeräts (10) zuzugreifen,
- durch den Manager dedizierter Architekturen (24) mindestens eine gleichzeitige Verbindung zu mehreren Kommunikationsnetzen (40, 41, 42, 50, 51, 52) aufzubauen und getrennt zu verwalten,
- die unabhängige Verwaltung der Gruppe der den Kommunikationsnetzen (40, 41, 42, 50, 51, 52) dedizierten Architekturen (15, 16, 17, 18) zu verarbeiten,
- die gleichzeitige Verwaltung mehrerer mit dem Endgerät (10) verbundener Kommunikationsnetze (40, 41, 42, 50, 51, 52) zu verarbeiten,
- mehrere der Kommunikationsnetze (40, 41, 42, 50, 51, 52) unabhängig zu verwalten, nachdem von jedem der mit dem Endgerät (10) verbundenen Netzwerke eine nicht-einmalige Adresse empfangen wurde.
